# EUROPÄISCHE PATENTSCHRIFT

(11) **EP 2 646 299 B1**
(45) Veröffentlichungstag und Bekanntmachung des Hinweises auf die Patenterteilung: **16.09.2015**
(21) Anmeldenummer: 11770105.2
(22) Anmeldetag: 14.10.2011
(51) Int. Cl.: B60T 8/36, F04B 53/16, F01C 21/10, B21K 1/26

(54) **BLOCKFÖRMIGES PUMPENGEHÄUSE EINER FAHRZEUGBREMSANLAGE UND VERFAHREN ZU DESSEN HERSTELLUNG**
PUMP HOUSING, IN BLOCK FORM, OF A VEHICLE BRAKE SYSTEM, AND METHOD FOR PRODUCING THE SAME
CORPS DE POMPE EN FORME DE BLOC D'UN SYSTÈME DE FREINAGE DE VÉHICULE, ET SON PROCÉDÉ DE FABRICATION

(30) Priorität: 01.12.2010 DE 102010062270
(43) Veröffentlichungstag der Anmeldung: 09.10.2013
(73) Patentinhaber: Robert Bosch GmbH, 70442 Stuttgart (DE)
(72) Erfinder: FRODL, Wolfgang, 87509 Immenstadt (DE); MAYR, Matthias, Rettenberg 87549 (DE); WEH, Andreas, 87477 Sulzberg (DE)
(86) Internationale Anmeldenummer: PCT/EP2011/067961
(87) Internationale Veröffentlichungsnummer: WO 2012/072324

(56) Entgegenhaltungen:
- WO-A1-03/047934
- WO-A1-2005/042975
- WO-A2-2010/133390
- DE-A1- 4 442 792

## Beschreibung

### Stand der Technik

Die Erfindung betrifft ein blockförmiges Pumpengehäuse einer Fahrzeugbremsanlage, mit einer auf Endmaß gefertigten Oberseite und einer auf Endmaß gefertigten Unterseite, bei dem mittels eines Extrusionsverfahrens ein Rohling in Form eines Strangs vorbereitet worden ist. Ferner betrifft die Erfindung ein Verfahren zum Herstellen eines solchen blockförmigen Pumpengehäuses.

Blockförmige Pumpengehäuse von Fahrzeugbremsanlagen werden als so genannter Hydraulikblock in der Regel aus Aluminium hergestellt. Dabei wird ein Fertigungsverfahren angewendet, bei dem zunächst Rohaluminium zu Stangen-Halbzeug verarbeitet wird. Die Stangen werden nachfolgend in Blöcke gesägt, die mittels spanender Fertigung, in der Regel einem Fräs-Prozess, an zumindest einer Seite auf Endmaß gearbeitet werden. Anders können die für die weitere Verarbeitung erforderlichen Maßtoleranzen für das Pumpengehäuse nicht hergestellt werden.

Aus WO 2005/042975 A1 ist eine Anschlussplatte einer hydraulischen Maschine und ein Verfahren zur Herstellung der Anschlussplatte bekannt, bei denen die Anschlussplatte aus einem zuvor hergestellten Strangprofil zu Anschlussplatten-Rohlingen gleicher oder verschiedener Stärke bzw. Dicke abgelängt und dann weiterverarbeitet wird.

Aus WO 2010/133390 A2 ist es bekannt ein rohes, nicht spanabhebend bearbeitetes Pumpengehäuse eines Kraftfahrzeug-Hydroaggregats mit einer seiner Außenflächen an einem Anschlag anzulegen, um darin durch spanabhebende Bearbeitung Öffnungen zum Aufnehmen von Komponenten einer zugehörigen Pumpe auszubilden.

Der Erfindung liegt die Aufgabe zugrunde, ein Pumpengehäuse einer Fahrzeugbremsanlage zu schaffen, das kostengünstiger herstellbar ist.

### Offenbarung der Erfindung

Erfindungsgemäß ist ein blockförmiges Pumpengehäuse einer Fahrzeugbremsanlage und ein Verfahren für dessen Herstellung geschaffen, mit einer auf Endmaß gefertigten Oberseite und einer auf Endmaß gefertigten Unterseite, bei dem mittels eines Extrusionsverfahrens ein Rohling in Form eines Strangs vorbereitet sowie nachfolgend die Endmaße der Oberseite und der Unterseite mittels eines spanlosen Umformverfahrens aus dem Rohling hergestellt worden sind bzw. werden. Ferner ist der Rohling nachfolgend in einzelne Blöcke gesägt worden. Mit den Endmaßen der Oberseite und der Unterseite ist das Dickenmaß der Blöcke festgelegt worden, um darin Öffnungen auszubilden.

Gemäß der Erfindung wird der Rohling des Pumpengehäuses insbesondere nach einem Prozess des Extrudierens in Form von Aluminium-Stangen spanlos umgeformt. Unter Umformen werden alle Fertigungsverfahren zusammengefasst, in denen insbesondere Metalle gezielt plastisch in eine andere Form gebracht werden. Es wird auch von bildsamer Formgebung gesprochen. Dabei wird oftmals zunächst ein urgeformtes (beispielsweise gegossenes) Vormaterial (ein Strang aus dem Strangguss oder ein Block aus dem Blockguss) in ein Halbzeug bzw. einen Rohling umgeformt. Die Masse und der Zusammenhalt des Werkstoffs werden bei der Umformung beibehalten, auch wenn sich die Dichte des Werkstoffs ändern kann. Umformen unterscheidet sich von Verformen dadurch, dass die Formänderung gezielt eingebracht wird.

Mit dem erfindungsgemäßen Vorgehen entfallen die Kosten für eine spanende Bearbeitung und ferner auch für ein Entgraten an mindestens einer Seite des Pumpengehäuses. Die nicht spanend bearbeitete Oberfläche bietet mehr Schutz vor Korrosion, wodurch Kosten für eine Versiegelung der Oberfläche eingespart werden können. Alternativ kann der Schutz der Oberfläche während der Herstellung des Rohlings geschaffen werden, weil die Oberfläche nicht mehr zerspant wird.

Das Rohlingsgewicht kann reduziert werden, da das für die spanende Fertigung vorgehaltene Übermaß von ca. 0,5 mm entfallen kann. Eine weitere Kosteneinsparung beim Rohmaterial-Verbrauch ist die Folge.

Es ist auch keine Kennzeichnung mehr für die einzelnen Seiten bzw. Oberflächen des blockförmigen Pumpengehäuses erforderlich, da diese qualitativ gleichwertig hergestellt werden. Damit entfallen weitere Kosten. Auch ist eine 100%-ige Prüfung der Maße nicht mehr erforderlich, da diese mittels einer spanlosen Umformung überraschenderweise besonders prozesssicher hergestellt werden können. Dies gilt insbesondere für die bei Fahrzeugbremsanlagen gewünschten großen Stückzahlen. Mit der erfindungsgemäßen Vorgehensweise kann eine hohe Stabilität von Form und Maßen über den Herstellungsprozess hinweg gewährleistet werden.

Schließlich entfällt auch das Vorsehen besonderer Halteflächen für eine Befestigung während einer spanenden Bearbeitung. Bei einer solchen spanenden Bearbeitung entstehen in mehreren Achsen Kräfte, die es abzufangen gilt. Dazu wurde bei bisherigen Herstellungsverfahren am Pumpengehäuse eine spezielle Spanntasche mit Hinterschneidung für insbesondere die zweite Spannlage vorgesehen.

Als spanloses Umformverfahren wird bevorzugt ein Pressen, insbesondere ein Pressen mit mindestens einer Walze oder alternativ mit mindestens einem Stempel, ausgeführt.

Der Rohling wird vorzugsweise mittels eines Extrusionsverfahrens hergestellt.

Die Endmaße der Oberseite und der Unterseite werden bevorzugt auf ein Toleranzmaß von kleiner 0,1 mm hergestellt. Mit dem spanlosen Umformen wird der Rohling im Bereich von 0,5 mm bis 0,2 mm in die genannte Blockdicke gebracht, ohne dass es einer spanenden Bearbeitung bedarf. Bei der dem erfindungsgemäßen Vorgehen nachfolgenden Zerspanung von Öffnungen im blockförmigen Pumpengehäuse muss dann nicht mehr auf eine Orientierung des Pumpengehäuses geachtet werden, weil die erste und die zweite Spannlage für diese Zerspanungen von Öffnungen konzeptionell gleichwertig sind.

Nach dem spanlosen Umformverfahren wird das Pumpengehäuse insbesondere mit Oberflächenschutz versehen. Als Oberflächenschutz wird vorteilhaft ein Eloxieren oder ein atmosphärischer Schutz mit Plasma vorgesehen.

Nachfolgend wird ein Ausführungsbeispiel der erfindungsgemäßen Lösung anhand der beigefügten schematischen Zeichnungen näher erläutert. Es zeigt:
- Fig. 1: eine Abfolge von Schritten des Herstellens eines blockförmigen Pumpengehäuses gemäß dem Stand der Technik,
- Fig. 2: eine perspektivische Ansicht eines Pumpengehäuses mit einer auf Endmaß gefertigten Oberseite und einer auf Endmaß gefertigten Unterseite gemäß dem Stand der Technik vor dem ersten Zerspanen von Öffnungen,
- Fig. 3: eine Seitenansicht des Pumpengehäuses gemäß Fig. 2 in seiner ersten Aufspannvorrichtung,
- Fig. 4: eine perspektivische Ansicht einer gesamten ersten Spannanordnung mit ersten Aufspannvorrichtungen gemäß Fig. 3,
- Fig. 5: eine perspektivische Ansicht eines Pumpengehäuses mit einer auf Endmaß gefertigten Oberseite und einer auf Endmaß gefertigten Unterseite gemäß dem Stand der Technik vor dem zweiten Zerspanen von Öffnungen,
- Fig. 6: eine Seitenansicht des Pumpengehäuses gemäß Fig. 5 in seiner zweiten Aufspannvorrichtung,
- Fig. 7: eine perspektivische Ansicht einer gesamten zweiten Spannanordnung mit zweiten Aufspannvorrichtungen gemäß Fig. 6,
- Fig. 8: eine Abfolge von Schritten des Herstellens eines blockförmigen Pumpengehäuses gemäß eines ersten Ausführungsbeispiels der Erfindung,
- Fig. 9: eine Abfolge von Schritten des Herstellens eines blockförmigen Pumpengehäuses gemäß einem zweiten Ausführungsbeispiel der Erfindung,
- Fig. 10: eine perspektivische Ansicht eines Pumpengehäuses mit einer auf Endmaß gefertigten Oberseite und einer auf Endmaß gefertigten Unterseite gemäß der Erfindung vor dem ersten Zerspanen von Öffnungen,
- Fig. 11: eine Seitenansicht des Pumpengehäuses gemäß Fig. 10 in seiner ersten Aufspannvorrichtung,
- Fig. 12: eine perspektivische Ansicht einer gesamten ersten Spannanordnung mit ersten Aufspannvorrichtungen gemäß Fig. 11,
- Fig. 13: eine perspektivische Ansicht eines Pumpengehäuses mit einer auf Endmaß gefertigten Oberseite und einer auf Endmaß gefertigten Unterseite gemäß der Erfindung vor dem zweiten Zerspanen von Öffnungen,
- Fig. 14: eine Seitenansicht des Pumpengehäuses gemäß Fig. 13 in seiner zweiten Aufspannvorrichtung und
- Fig. 15: eine perspektivische Ansicht einer gesamten zweiten Spannanordnung mit zweiten Aufspannvorrichtungen gemäß Fig. 14.

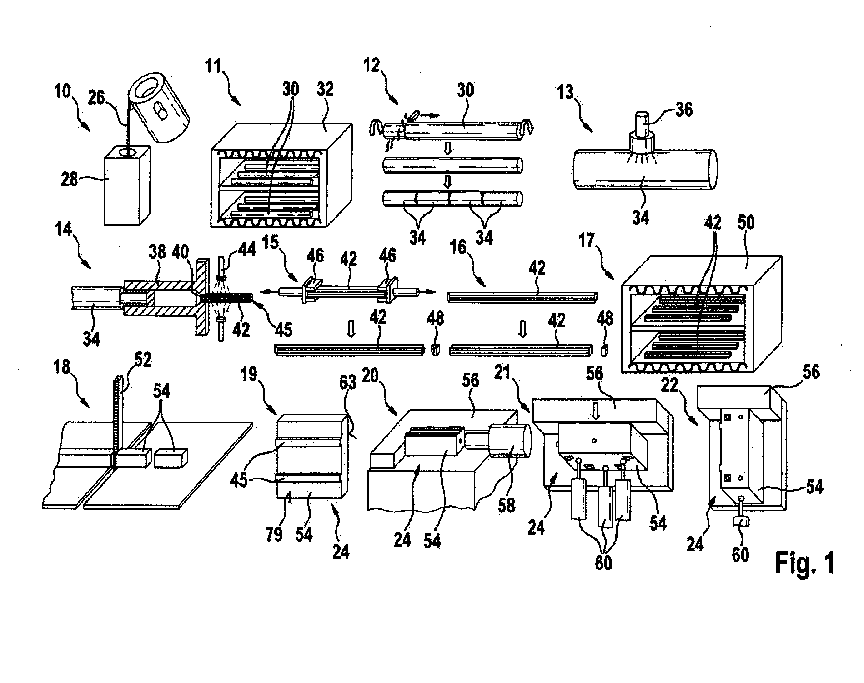

In der Fig. 1 sind einzelne Schritte 10 bis 22 des Herstellens eines blockförmigen Pumpengehäuses 24 gemäß dem Stand der Technik veranschaulicht. Im Schritt 10 wird flüssiges Aluminium 26 in eine Schalengussform 28 gegeben und bei einer Temperatur von ca. 650 °C Stangenware 30 gegossen. Die Stangeware 30 wird im Schritt 11 in einem Ofen 32 getempert. Im Schritt 12 wird die Stangenware 30 überdreht und in ca. 1500 mm lange Stangenabschnitte 34 gesägt. Der einzelne Stangenabschnitt 34 wird nachfolgend im Schritt 13 mit einem Fühler 36 im Hinblick auf seine Ersatzfehlergröße vermessen.

Im Schritte 14 werden sechs Stangenabschnitte 34 (nur einer dargestellt) parallel in einem Extrusionsverfahren mittels eines Extruders 38 bei ca. 450 °C an einer Austrittsdüse 40 zu einem Strang 42 verarbeitet, der dann an einer Kühlung 44 auf ca. 520 °C abgekühlt wird. Der einzelne Strang 42 weist dabei nicht einen rein rechteckigen Querschnitt auf, sondern ist an einer seiner Seitenflächen mit zwei stegförmigen, längsgerichteten Markierungen 45 versehen. Mehrere solcher Stränge 42 werden im Schritt 15 an einer Reckeinrichtung 46 auf eine Länge von ca. 20 m gereckt und nachfolgend werden an den Enden der gereckten Stränge 42 deren Endabschnitte 48 abgesägt.

Diesen Schritten 10 bis 16 folgt der Schritt 17, bei dem die vorbereiteten Stränge 42 bei einer Temperatur von ca. 175 °C in einem Ofen 50 getempert werden. Danach werden im Schritt 18 die getemperten Stränge 42 mittels einer Säge 52 in einzelne Blöcke 54 gesägt. Jeder dieser Blöcke 54 wird nachfolgend zu einem einzelnen Pumpengehäuse 24 weiterverarbeitet. Dabei wird der Block 54 zunächst in dem Schritt 19 entgratet. Anschließend wird der einzelne Block 54 in den Schritten 20 bis 22 vermessen, wobei er gegen verschiedene Hartanschläge 56 angelegt und mittels eines Diamant-Fühlers 58 sowie mehrerer Kugel-Fühler 60 angedrückt wird.

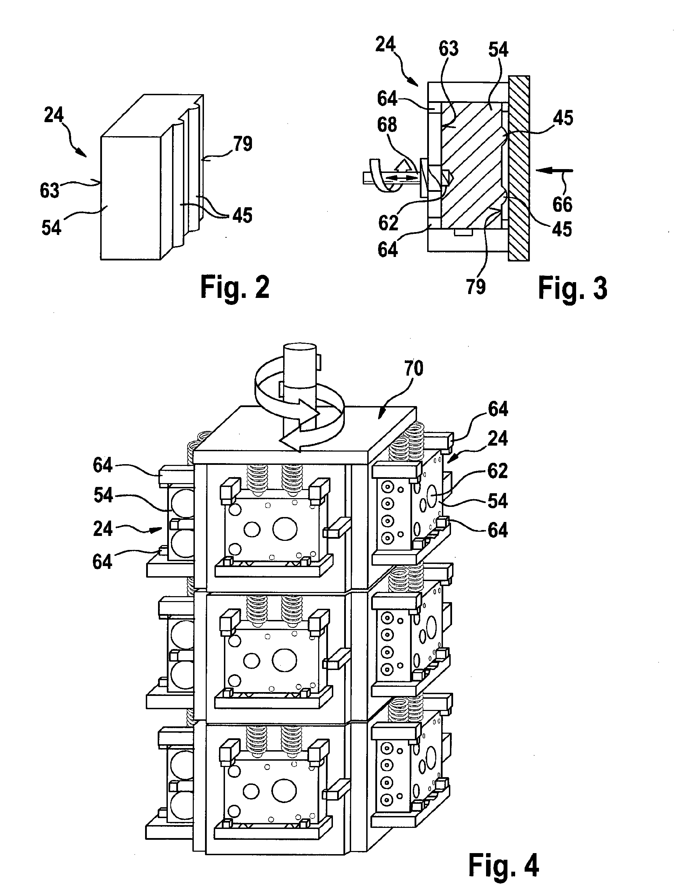

In den Fig. 2 bis 4 ist veranschaulicht, wie der derart vorbereitete und vermessene Block 54 eines Pumpengehäuses 24 in einer ersten Aufspannung mit Öffnungen 62 versehen wird. Der Block 54 wird mittels der stegförmigen Markierungen 45 in seiner Lage erkannt und so ausgerichtet, dass er mit seiner den Markierungen 45 gegenüberliegenden Seitenfläche 63 (Oberseite) an einen Anschlag 64 angelegt wird. Dabei wird der Block 54 mittels einer derart großen Kraft 66 gegen den Anschlag 64 gepresst, dass er an der Seitenfläche 63 mittels eines Werkzeugs 68 zerspant werden kann, um dort eine der Öffnungen 62 auszubilden.

In der Fig. 4 ist dazu die zugehörige Aufspannvorrichtung 70 dargestellt, an der insgesamt zwölf Blöcke 54 wie einzeln in Fig. 3 veranschaulicht gehalten sind.

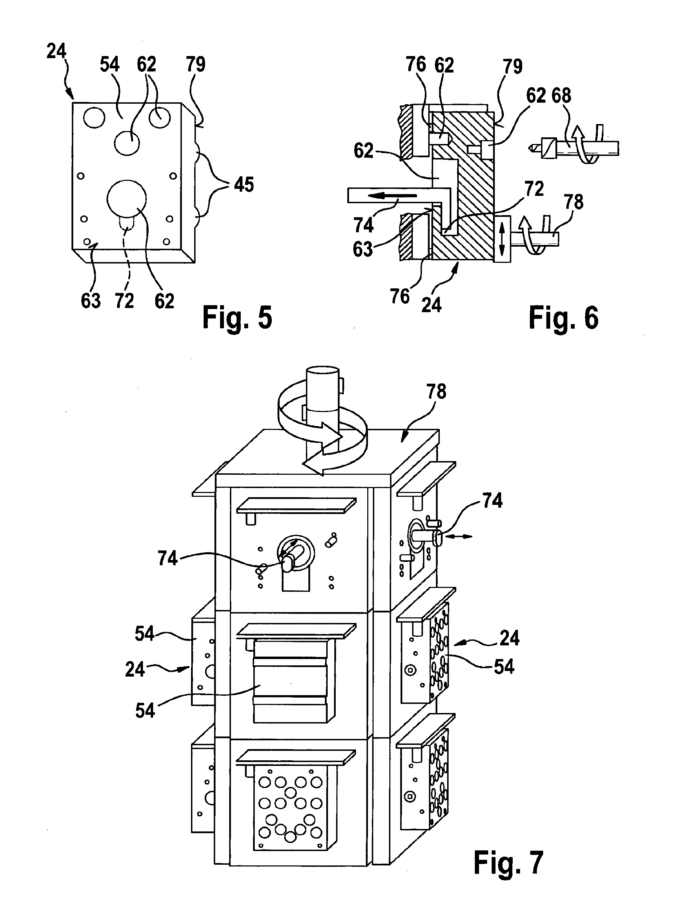

Die Fig. 5 zeigt den derart verarbeiteten Block 54 mit seinen Öffnungen 62, wobei eine der Öffnungen 62 mit einer Hinterschneidung 72 versehen worden ist. An dieser Hinterschneidung 72 wird der derartige Block 54 mittels eines Haltewerkzeugs 74 gegen einen Anschlag 76 gezogen, um ihn so in einer zweiten Aufspannung zu halten, wie sie in Fig. 6 dargestellt ist. So aufgespannt kann der Block 54 mit einem Fräser 78 an jener Seitenfläche 79 (Unterseite) überfräst werden, an der sich die Markierungen 45 befunden haben. Ferner können an dieser Seitenfläche 79 mit Werkzeugen 68 weitere Öffnungen 62 ausgebildet werden.

In der Fig. 7 ist dazu wieder eine zugehörige Aufspannvorrichtung 78 für diese zweite Aufspannung mit ihren insgesamt zwölf Haltewerkzeugen 74 veranschaulicht.

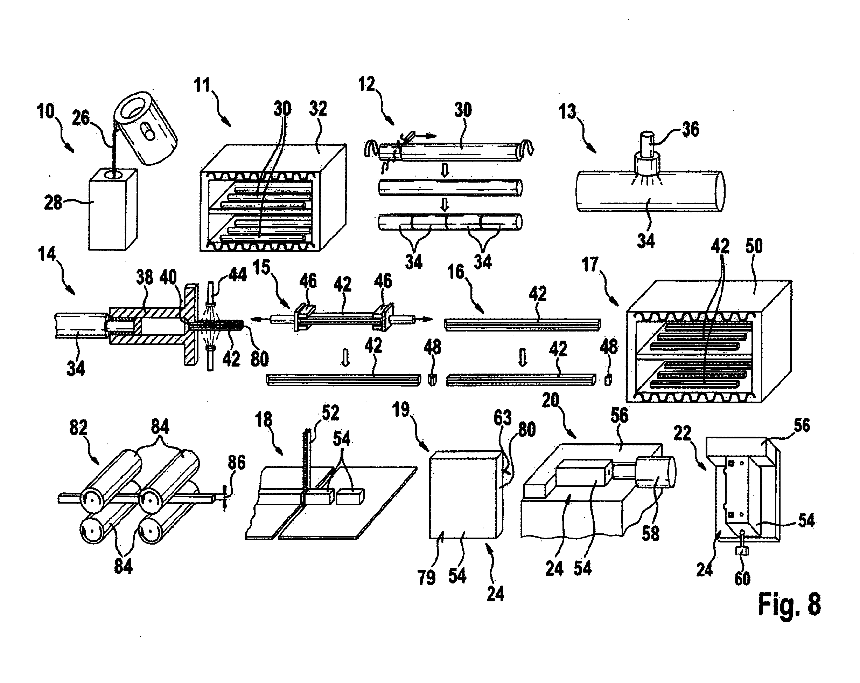

Mit den Fig. 8 bis 15 ist das erfindungsgemäße Vorgehen veranschaulicht. So zeigt die Fig. 8 ein erstes Ausführungsbeispiel eines schrittweisen Herstellens eines erfindungsgemäßen Pumpengehäuses 24. Bei diesem Herstellungsverfahren sind die Schritte 10 bis 14 im Wesentlichen gleich zu jenen der Fig. 1, wobei bereits im Schritt 14 ein Unterschied darin liegt, dass die Stränge 42 nicht mit stegförmigen Markierungen 45 versehen werden, sondern stattdessen einen im Wesentlichen rechteckigen Querschnitt 80 aufweisen. Auch die Schritte 15 bis 17 entsprechen jenen Schritten der Fig. 1.

Auf den Schritt 17 des Temperns der vorbereiteten Stränge 42 gemäß Fig. 8 folgt dann jedoch ein neuer Schritt 82, bei dem ein Rohling in Form eines Strangs 42-oder mehrere Stränge 42 mittels einander gegenüberliegender Walzen 84 in ihrer Dicke auf ein Toleranzmaß 86 von kleiner 0,1 mm gebracht werden. Dieses Toleranzmaß 86 kann über den Fertigungsprozess hinweg derart stabil hergestellt werden, dass im nachfolgenden Prozess nach einem Sägen im Schritt 18 zwar noch ein Schritt 19 des Entgratens und Schritte 20 sowie 22 erfolgen, einer der Vermessungsschritte, nämlich der Schritt 21, aber entfallen kann. An der Darstellung des Schritts 19 gemäß Fig. 8 ist dabei auch insbesondere erkennbar, dass der auf Dickenmaß umgeformte Block 54 keine Markierungen 45 aufweist und stattdessen dort einen rechteckigen Querschnitt 80 hat.

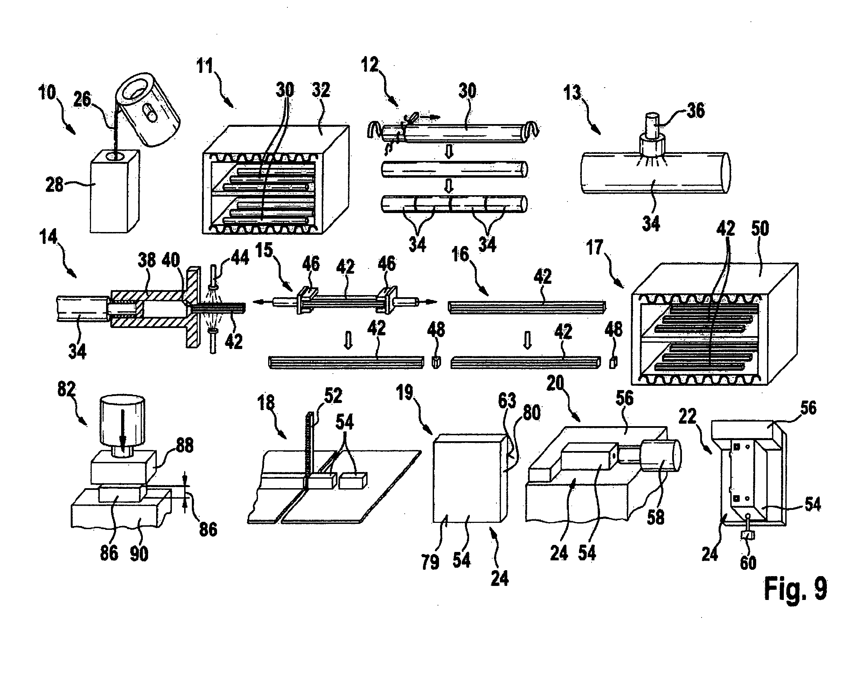

In der Fig. 9 ist ein weiteres Ausführungsbeispiel eines schrittweisen Herstellens eines erfindungsgemäßen Pumpengehäuses 24 veranschaulicht, bei dem die Schritte 10 bis 17 und 18 bis 20 sowie 22 mit jenen der Fig. 8 übereinstimmen. Im Schritt 82 wird bei diesem Ausführungsbeispiel das Umformen des bzw. der Stränge 42 auf ein Dickenmaß mit sehr geringem Toleranzmaß 86 nicht mit Walzen sondern mit einem Stempel 88 und einem Gegenlager 90 ausgeführt.

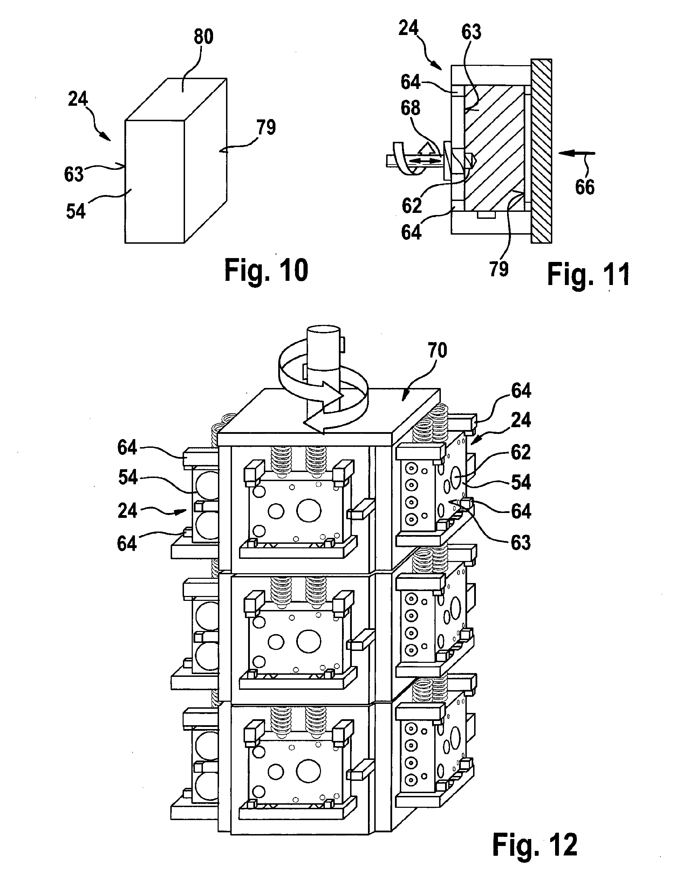

Die Fig. 10 bis 12 zeigen, wie der derart vorbereitete erfindungsgemäße Block 54 in einer ersten Aufspannung mit einer Aufspannvorrichtung 70 weiterverarbeitet wird. Diese Aufspannung entspricht im Wesentlichen jener der Fig. 3 und 4, wobei allerdings anzumerken ist, dass an dem Block 54 gemäß Fig. 10 eben keine stegförmigen Markierungen 45 vorzufinden sind und auch keine Hinterschneidung 72 auszubilden ist.

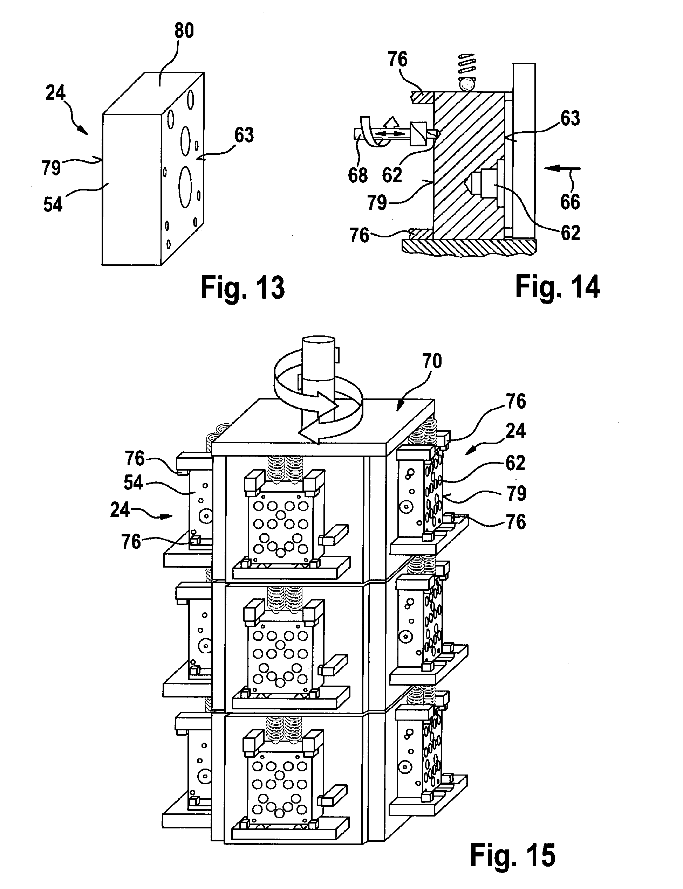

In den Fig. 13 bis 15 ist dann die zweite Aufspannung des erfindungsgemäßen Blocks 54 gezeigt, bei der der Block 54 nicht mehr überfräst zu werden braucht und es auch keiner Hinterschneidung 72 und keines Haltewerkzeugs 74 mehr bedarf, um ihn an der zugehörigen Aufspannvorrichtung 70 halten zu können. Der Block 54 kann vielmehr gemäß Fig. 14 in herkömmlicher Weise mit einer Kraft 66 gegen einen Anschlag 76 gepresst und mittels eines Werkzeugs 68 bearbeitet werden, um darin Öffnungen 62 auszubilden.

## Patentansprüche

1. Blockförmiges Pumpengehäuse (24) einer Fahrzeugbremsanlage, mit einer auf Endmaß gefertigten Oberseite und einer auf Endmaß gefertigten Unterseite, bei dem mittels eines Extrusionsverfahrens (14) ein Rohling in Form eines Strangs (42) vorbereitet worden ist,
**dadurch gekennzeichnet, dass** nachfolgend die Endmaße der Oberseite (63) und der Unterseite (79) mittels eines spanlosen Umformverfahrens (82) aus dem Rohling hergestellt worden sind und dieser nachfolgend in einzelne Blöcke (54) gesägt worden ist, wobei mit den Endmaßen der Oberseite (63) und der Unterseite (79) das Dickenmaß der Blöcke (54) festgelegt worden ist, um darin Öffnungen (62) auszubilden.

2. Blockförmiges Pumpengehäuse nach Anspruch 1,
bei dem als spanloses Umformverfahren (82) ein Pressen, insbesondere ein Pressen mit Walzen (84), ausgeführt worden ist.

3. Blockförmiges Pumpengehäuse nach Anspruch 1 oder 2,
bei dem die Endmaße der Oberseite (63) und der Unterseite (79) auf ein Toleranzmaß (86) von kleiner 0,1 mm hergestellt worden sind.

4. Blockförmiges Pumpengehäuse nach einem der Ansprüche 1 bis 3,
das nach dem spanlosen Umformverfahren (82) mit Oberflächenschutz versehen worden ist.

5. Verfahren zum Herstellen eines blockförmigen Pumpengehäuses einer Fahrzeugbremsanlage, mit dem Schritt: Fertigen einer Oberseite (63) und einer Unterseite (79) des blockförmigen Pumpengehäuses (24) auf Endmaß, bei dem mittels eines Extrusionsverfahrens (14) ein Rohling in Form eines Strangs (42) vorbereitet wird,
**dadurch gekennzeichnet, dass** nachfolgend die Endmaße der Oberseite (63) und der Unterseite (79) mittels eines spanlosen Umformverfahrens (82) aus dem Rohling hergestellt werden und dieser nachfolgend in einzelne Blöcke (54) gesägt wird, wobei mit den Endmaßen der Oberseite (63) und der Unterseite (79) das Dickemaß der Blöcke festgelegt wird, um darin Öffnungen (62) auszubilden.

6. Verfahren nach Anspruch 5,
bei dem als spanloses Umformverfahren (82) ein Pressen, insbesondere ein Pressen mit Walzen (84), ausgeführt wird.

7. Verfahren nach Anspruch 5 oder 6,
bei dem die Endmaße der Oberseite (63) und der Unterseite (79) auf ein Toleranzmaß (86) von kleiner 0,1 mm hergestellt werden.

8. Verfahren nach einem der Ansprüche 5 bis 7,
bei dem das blockförmige Pumpengehäuse (24) nach dem spanlosen Umformverfahren (82) mit Oberflächenschutz versehen wird.

## Claims

1. Block-form pump housing (24) of a vehicle brake system, having a top side manufactured to final dimensions and a bottom side manufactured to final dimensions, in which a blank in the form of a strand (42) has been prepared by means of an extrusion process (14),
**characterized in that** the final dimensions of the top side (63) and of the bottom side (79) have subsequently been produced by means of a non-cutting forming process (82) from the blank, and the latter has subsequently been sawn into individual blocks (54), wherein the thickness dimension of the bocks (54) has been determined with the final dimensions of the top side (63) and of the bottom side (79) in order to form openings (62) therein.

2. Block-form pump housing according to Claim 1,
in which pressing, in particular pressing with rollers (84), has been carried out as the non-cutting forming process (82).

3. Block-form pump housing according to Claim 1 or 2,
in which the final dimensions of the top side (63) and of the bottom side (79) have been produced to a tolerance (86) of less than 0.1 mm.

4. Block-form pump housing according to one of Claims 1 to 3,
which has been provided with surface protection after the non-cutting forming process (82).

5. Process for producing a block-form pump housing of a vehicle brake system, comprising the following step: manufacturing a top side (63) and a bottom side (79) of the block-form pump housing (24) to final dimensions, in which a blank in the form of a strand (42) is prepared by means of an extrusion process (14),
**characterized in that** the final dimensions of the top side (63) and of the bottom side (79) are subsequently produced by means of a non-cutting forming process (82) from the blank, and the latter is subsequently sawn into individual blocks (54), wherein the thickness dimension of the blocks is determined with the final dimensions of the top side (63) and of the bottom side (79) in order to form openings (62) therein.

6. Process according to Claim 5,
in which pressing, in particular pressing with rollers (84), is carried out as the non-cutting forming process (82).

7. Process according to Claim 5 or 6,
in which the final dimensions of the top side (63) and of the bottom side (79) are produced to a tolerance (86) of less than 0.1 mm.

8. Process according to one of Claims 5 to 7,
in which the block-form pump housing (24) is provided with surface protection after the non-cutting forming process (82).

## Revendications

1. Corps de pompe en forme de bloc (24) d'un système de freinage de véhicule, avec un côté supérieur fabriqué à mesure exacte et un côté inférieur fabriqué à mesure exacte, dans lequel on a préparé une ébauche en forme de barre (42) au moyen d'un procédé d'extrusion (14), **caractérisé en ce que** les mesures exactes du côté supérieur (63) et du côté inférieur (79) ont ensuite été réalisées à partir de l'ébauche au moyen d'un procédé de formage sans enlèvement de copeaux (82) et celle-ci a ensuite été sciée en blocs individuels (54), dans lequel la mesure d'épaisseur des blocs (54) a été déterminée avec les mesures exactes du côté supérieur (63) et du côté inférieur (79), afin d'y pratiquer des ouvertures (62).

2. Corps de pompe en forme de bloc selon la revendication 1, dans lequel un pressage, en particulier un pressage avec des rouleaux (84), a été exécuté comme procédé de formage sans enlèvement de copeaux (82).

3. Corps de pompe en forme de bloc selon la revendication 1 ou 2, dans lequel les mesures exactes du côté supérieur (63) et du côté inférieur (79) ont été réalisées avec une mesure de tolérance (86) inférieure à 0,1 mm.

4. Corps de pompe en forme de bloc selon l'une quelconque des revendications 1 à 3, qui a été doté d'une protection de surface après le procédé de formage sans enlèvement de copeaux (82).

5. Procédé de fabrication d'un corps de pompe en forme de bloc d'un système de freinage de véhicule, comprenant l'étape de fabrication à mesure exacte d'un côté supérieur (63) et d'un côté inférieur (79) du corps de pompe en forme de bloc (24), dans lequel on prépare une ébauche en forme de barre (42) au moyen d'un procédé d'extrusion (14), **caractérisé en ce que** l'on réalise ensuite les mesures exactes du côté supérieur (63) et du côté inférieur (79) à partir de l'ébauche au moyen d'un procédé de formage sans enlèvement de copeaux (82) et on scie ensuite celle-ci en blocs individuels (54), dans lequel on fixe la mesure d'épaisseur des blocs avec les mesures exactes du côté supérieur (63) et du côté inférieur (79), afin d'un pratiquer des ouvertures (62).

6. Procédé selon la revendication 5, dans lequel on exécute un pressage, en particulier un pressage avec des rouleaux (84), comme procédé de formage sans enlèvement de copeaux (82).

7. Procédé selon la revendication 5 ou 6, dans lequel on réalise les mesures exactes du côté supérieur (63) et du côté inférieur (79) avec une mesure de tolérance (86) inférieure à 0,1 mm.

8. Procédé selon l'une quelconque des revendications 5 à 7, dans lequel on munit le corps de pompe en forme de bloc (24) d'une protection de surface après le procédé de formage sans enlèvement de copeaux (82).
